# EUROPÄISCHE PATENTSCHRIFT

(11) **EP 3 670 151 B1**
(45) Veröffentlichungstag und Bekanntmachung des Hinweises auf die Patenterteilung: **27.07.2022**
(21) Anmeldenummer: 20156686.6
(22) Anmeldetag: 31.03.2016
(51) Int. Cl.: B29C 64/214, B29C 64/35, B33Y 10/00, B33Y 30/00, B29C 64/236

(54) **VORRICHTUNG ZUM HERSTELLEN VON DREIDIMENSIONALEN OBJEKTEN DURCH AUFEINANDERFOLGENDES VERFESTIGEN VON SCHICHTEN SOWIE EIN ZUGEHÖRIGES VERFAHREN**
DEVICE AND AN ASSOCIATED METHOD FOR PRODUCING THREE-DIMENSIONAL OBJECTS BY SOLIDIFYING LAYERS ONE AFTER THE OTHER
DISPOSITIF DE FABRICATION D'OBJETS TRIDIMENSIONNELS PAR DURCISSEMENT SUCCESSIF DES COUCHES ET PROCÉDÉ ASSOCIÉ

(30) Priorität: 07.05.2015 DE 102015107178
(43) Veröffentlichungstag der Anmeldung: 24.06.2020
(62) Teilanmeldung aus: 16713437.8
(73) Patentinhaber: CL Schutzrechtsverwaltungs GmbH, 96215 Lichtenfels (DE)
(72) Erfinder: Herzog, Frank, 96215 Lichtenfels (DE); Bechmann, Florian, 96215 Lichtenfels (DE); Lippert, Markus, 96215 Lichtenfels (DE); Zeulner, Fabian, 96215 Lichtenfels (DE); Stammberger, Jens, 96472 Rödental (DE); Diller, Christian, 96215 Lichtenfels (DE)
(74) Vertreter: Hafner & Kohl PartmbB

(56) Entgegenhaltungen:
- EP-A2- 2 732 889
- WO-A1-2014/191200
- DE-A1-102006 038 858
- DE-A1-102007 040 755
- DE-U1-202009 018 948
- US-A1- 2014 265 045

## Beschreibung

Die Erfindung betrifft eine Vorrichtung zum Herstellen von dreidimensionalen Objekten durch aufeinanderfolgendes Verfestigen von Schichten eines mittels Strahlung verfestigbaren Aufbaumaterials an den dem jeweiligen Querschnitt des Objektes entsprechenden Stellen, mit den weiteren Merkmalen des Oberbegriffes des Patentanspruches 1 sowie ein zugehöriges Verfahren.

Eine Vorrichtung der vorstehend bezeichneten Art weist zunächst ein Gehäuse auf, in dem eine Prozesskammer untergebracht ist. Unter der Ebene eines Prozesskammerbodens ist ein Baubehälter untergebracht, auf der Aufbaumaterial und ein Teilobjekt oder Objekt beim Herstellungsvorgang ruht. Darüber hinaus ist eine Aufbringvorrichtung vorgesehen, mit der Schichten des Aufbaumaterials auf die Tragevorrichtung vom Baubehälter oder eine zuvor gebildete Schicht aufgetragen werden. Eine Dosiereinrichtung dient dazu, Aufbaumaterial dem Beschichterelement der Aufbringvorrichtung zuzuführen. Das Beschichterelement fährt insbesondere linear über die Oberfläche des durch den Baubehälter definierten Baufeldes und verteilt das Aufbaumaterial als sehr dünne Schicht, die dann durch Bestrahlung mit einem fokussierten Laserstrahl an oder aufgeschmolzen wird und nach Abkühlung zur Bildung des Objektes erstarrt. Eine derartige Vorrichtung ist beispielsweise aus DE 10 2006 056 422.7 bekannt. Eine weitere Vorrichtung, gemäß dem Oberbegriff des Anspruchs 1, ist aus DE 10 2007 040 755 A1 bekannt.

Die bekannten Vorrichtungen sind insofern nachteilig, als die durch den Beschichtungsvorgang erforderliche Belichtungspause einen relativ langen Zeitraum einnimmt.

Der Erfindung liegt die Aufgabe zugrunde, eine Vorrichtung und ein zugehöriges Verfahren derart auszubilden, dass der gesamte Bauvorgang kürzer gestaltet werden kann. Dies wird dadurch gelöst, dass das Beschichterelement, am Ende eines Beschichtungsvorgangs für eine Schicht bei der Rückführung des Beschichterelementes in eine Beschichtungsausgangslage eine Ausweichbewegung ausführt, bei welcher das Beschichterelement den Scannerstrahl-Raumbereich zwischen der Bestrahlungsvorrichtung und einer aufgebrachten Schicht nicht kreuzt.

Als Kern der Erfindung wird es damit angesehen, Maßnahmen zu treffen, die eine sofortige Belichtungsaufnahme über vorzugsweise den gesamten Belichtungsbereich unmittelbar nach Ende eines Beschichtungsvorganges vorzunehmen oder zu starten. Dem Grunde nach kann bereits unmittelbar hinter dem während eines Beschichtungsvorganges in Auftragsrichtung laufenden Beschichterelement den Blichtungsvorgang zu beginnen, da aber Blichtungsvorgänge meist verteilt über die Baufläche oder große Abschnitte der Baufläche im Wege einer sogenannten "Island-Beschichtung" erfolgen, d. h. kleine Abschnitte belichtet werden, die zum Teil weit voneinander entfernt sind, um thermische Spannungen in einer Bauteilschicht zu vermeiden, ist es zweckdienlich, den Beschichter so zurückzuführen, dass vorzugsweise das gesamte Baufeld frei zur Belichtung zur Verfügung steht. Mit anderen Worten umfasst die Lehre des Patentanspruches 1 alle Rückführungsarten, bei denen das Beschichterelement oder weitere Elemente der Auftragsvorrichtung so geführt wird, dass ein Laserstrahl ungehindert durch ein den Strahl kreuzendes Beschichtungselement oder ein sonstiges Element der Auftragsvorrichtung freien Zugriff auf die Baufläche hat.

Die Ausweichbewegung umfasst vorteilhafter Weise eine Änderung der Raumlage des Beschichters bezogen auf die Raumlage des Beschichters beim Beschichtungsvorgang. Liegt beispielsweise der Beschichter oder das Beschichtungselement horizontal über der zu beschichtenden Fläche, dann ist mit einem Hochklappen, einem Wegschwenken, einem Herausdrehen aus dem Baufeld und dgl. eine Raumlagenänderung verbunden, die sich vorteilhaft auf die Beschleunigung des gesamten Bauprozesses auswirkt. Bei der Beschichterelementrückführung kann über einen oder mehrere Scanner eine gezielt und vollumfängliche Belichtung des gesamten Baufeldes begonnen werden.

Es ist auch möglich, das Beschichterelement im Wege der Ausweichbewegung seitlich linear aus dem Baufeld herauszufahren und seitlich vom Baufeld zurückzufahren. Dann kann eine ebene Lage des Beschichterelementes beibehalten werden, es wird nur seitlich vom Baufeld relativ viel Platz für die Rückführung beansprucht. Die Lineare Verschiebebewegung kann vorteilhafter Weise rechtwinkelig zur Auftragsrichtung verlängert, aber auch schräg angeordnet sein.

Erfindungsgemäß wird für die Beschleunigung des Bauvorganges bei der Ausweichbewegung das Beschichterelement mit einer erhöhten Geschwindigkeit verglichen mit einer Schichtauftragsgeschwindigkeit bewegt. Dadurch wird der Rückführungsvorgang des Beschichterelementes verkürzt. Arbeitet dazu die Belichtungseinrichtung z. B. mit mehreren Scannern über dem Baufeld, dann sind die Belichtungsphasen und Beschichtungsphasen verkürzt.

Das Beschichterelement kann einseitig um wenigstens eine Achse verschwenkbar gelagert sein. Die Verschwenkung kann horizontal erfolgen oder eine Hochschwenkbewegung umfassen. Es ist auch möglich, am Ende eines Auftragsvorgangs das Beschichterelement gleichsam in Richtung der Auftragsbewegung über die Baufläche hinaus rotierend zu verschwenken rotierend um das Baufeld herum in die Ausgangslage zurückzuschwenken, sodass bei einem Auftragsvorgang zusammen mit dem Rückführungsvorgang das Beschichterelement wie ein Zeiger über einem Zifferblatt um 360° verschwenkt wird.

Grundsätzlich ist es auch möglich, das Beschichterelement zur Rückführung in die Beschichtungsausgangslage am Ende des Beschichtungsvorganges von der Schicht der Bauebene abzuheben und oberhalb einer Scanneranordnung der Belichtungsvorrichtung zurück in die Ausgangslage zu führen. Die Rückführung kann zunächst eine Vertikalbewegung umfassen, sodann eine Horizontalbewegung über die Scanneranordnung hinweg in Richtung der Beschichtungsausgangslage und dann eine nach unten gerichtete Absenkbewegung. Genauso gut ist es aber auch möglich, den Beschichter unter Beibehaltung einer Parallellage zu seiner Beschichterlängsrichtung oder unter Hinterzufügung von Beschichterelement-Schwenkbewegungen auf einer Bogenlinie über die Scanneranordnung hinweg zur Ausgangslage zurückzubringen.

Besonders vorteilhaft ist es, wenn der in der Ausweichbewegung befindliche Beschichter an einem Beschichterwechsler vorbeifährt und dort eine alte Beschichterklinge abgezogen und eine neue Beschichterklinge aufgeschoben wird. Dies kann vollautomatisch geschehen. Es können Beschichterklingen und Bürsten unterschiedlicher Art aufgesetzt werden, je nachdem was der Bauvorgang erfordert. Es liegt auch im Rahmen der Erfindung, anstelle eines Beschichters oder zusätzlich zu einem Beschichterelement ein Sensorelement an einen Träger der Auftragseinrichtung anzukoppeln und z. B. Messungen über dem Baufeld, wie Temperaturmessungen, eine Strahlkaustikmessung, Schichtoberflächenqualitätsmessungen und dgl. durchzuführen.

Die Erfindung ist anhand von Ausführungsbeispielen näher erläutert. Diese zeigen:
- Fig. 1: eine schematische Darstellung einer Vorrichtung zur Herstellung von dreidimensionalen Objekten, in der der Scannerstrahlraumbereich zwischen Scanner und Baufeld angedeutet ist;
- Fig. 2: eine Draufsicht auf einen Prozesskammerboden mit Baufeld, Dosierkammeröffnung und Überlauföffnung; (Stand der Technik)
- Fig. 3: eine schematische Darstellung von Beschichterelementbewegungen beim Auftrag einer Schicht mit einer Ausweichbewegung;
- Fig. 4: eine Darstellung ähnlich Fig. 3, bei der die Beschichterelementbewegungen ohne die Baufeldöffnungen dargestellt sind;
- Fig. 5: eine schematische Darstellung einer Beschichterelementanordnung, die um eine seitliche Schwenkachse hochschwenkbar ist;
- Fig. 6: eine Beschichterelementdarstellung beim Schichtauftrag und bei einer Ausweichbewegung, bei welcher das Beschichterelement außerhalb der Bauebene horizontal oder mit einer zusätzlichen Hochklappkomponente um 360° verschwenkt wird;
- Fig. 7: eine schematische Darstellung einer rechteckigen oder bogenförmigen Führung eines Beschichterelementes über eine Scanneranordnung hinweg.

Zunächst wird auf Zeichnungsfigur 1 Bezug genommen, um die erfindungsgemäße Vorrichtung allgemein vorzustellen.

Dort ist eine Vorrichtung 1 zum Herstellen von dreidimensionalen Objekten 14 durch aufeinanderfolgendes Verfestigen von Schichten eines mittels Strahlung verfestigbaren Aufbaumaterials 9 an den dem jeweiligen Querschnitt des Objektes entsprechenden Stellen schematisch dargestellt. Die Vorrichtung 1 weist ein Gehäuse 2 auf, das eine Prozesskammer 3 mit einem Prozesskammerboden 4 umschließt. Unter der Ebene des Prozesskammerbodens 4 sind eine Dosiereinrichtung 5 zum Zustellen von Aufbaumaterial 9 und ein Baubehälter 6 mit einer höhenverstellbaren Tragevorrichtung 7 angeordnet. Benachbart zum Baubehälter 6 ist unter der Ebene des Prozesskammerbodens 4 ein Überlaufbehälter 8 angeordnet. Die Dosiereinrichtung 5, der Baubehälter 6 und der Überlaufbehälter 8 sind oben offen, d.h. der Prozesskammerboden 4 weist über der Dosiereinrichtung 5, dem Baubehälter 6 und dem Überlaufbehälter 8 Öffnungen auf.

Die Öffnung des Baubehälters 6 ist mit Bezugszeichen 13 versehen, die Überlauföffnung des Überlaufbehälters 8 trägt das Bezugszeichen 15. Ein Beschichtungselement 11 einer Auftragsvorrichtung 12 verteilt das Aufbaumaterial 9 schichtweise auf der Baufläche.

Um das Aufbaumaterial 9, das auf die Tragevorrichtung 7 oder eine bereits verfestigte Schicht des Objektes 14 aufgetragen ist, zu verfestigen, ist eine Bestrahlungsvorrichtung vorgesehen, die einen Laser 16 und einen Scanner 17 umfasst. Beim dargestellten Ausführungsbeispiel ist die Bestrahlungsvorrichtung über der Prozesskammer 3 angeordnet, der von dem Scanner 17 kommende Laserstrahl 19 durchsetzt ein Fenster 18 in der Prozesskammerdecke.

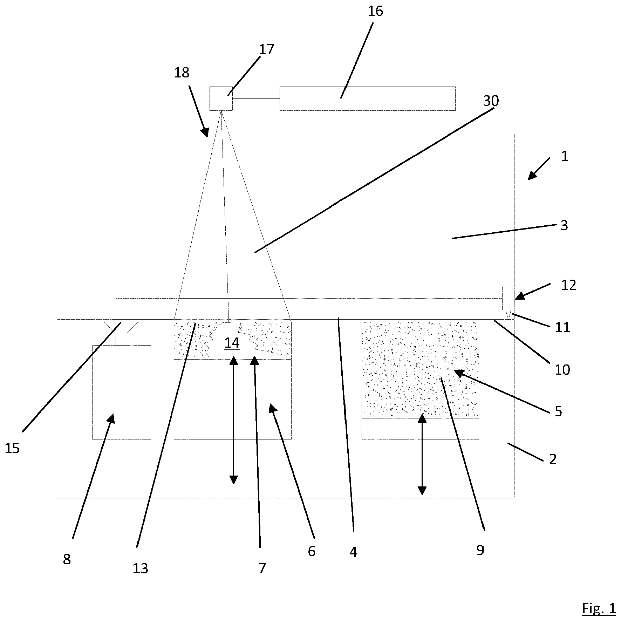

Über der Öffnung 13 des Baubehälters 6, die gleichsam die Baufläche definiert, ist zwischen dem Scanner 17 und der Öffnung 13 der Scannerstrahl-Raumbereich 30 angedeutet, das ist der Raumbereich, den ein Laserstrahl 19 bei maximaler Ablenkung bis zu den Kanten der Öffnung 13 einnimmt. Beim dargestellten Ausführungsbeispiel gemäß Fig. 1 ist nur ein Scanner 17 vorgesehen, d. h. der Scannerstrahl-Raumbereich 30 hat die Form einer spitzen Pyramide. Sind allerdings mehrere Scanner 17 vorgesehen, dann kann der Scannerstrahl-Raumbereich 30 auch eine andere Form haben, z. B. die Form eines Pyramidenstumpfes.

Nachfolgend wird auf Zeichnungsfigur 2 Bezug genommen. Dort in Draufsicht ein Prozesskammerboden 4 dargestellt, bei welchem ein Laufwagen einer herkömmlichen Aufbringvorrichtung 12 beidseitig auf Laufschienen 10 geführt ist, d. h. die Vor- und Rückbewegung bei dem Beschichtungsvorgang bzw. einem Rückführvorgang erfolgt immer auf der gleichen Linie. Das Beschichtungselement 11 und der Laufwagen kreuzen damit zwangsweise den über dem Baubehälter 6 liegenden Scannerstrahl-Raumbereich 30 bei der Rückführung des Beschichtungselementes 11 in eine Beschichtungsausgangslage.

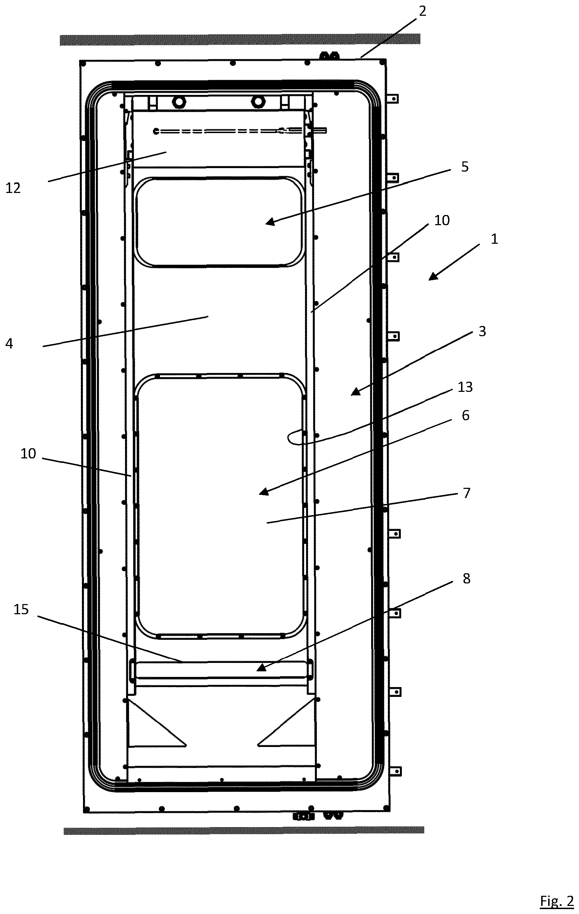

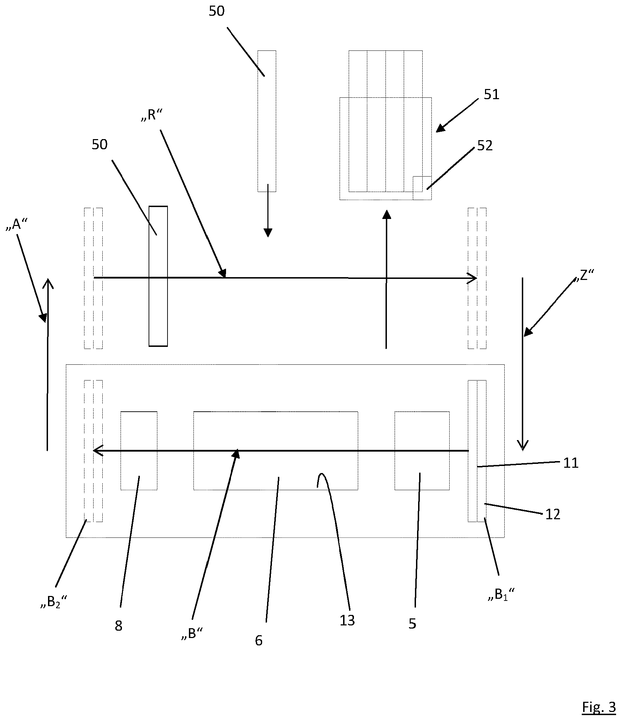

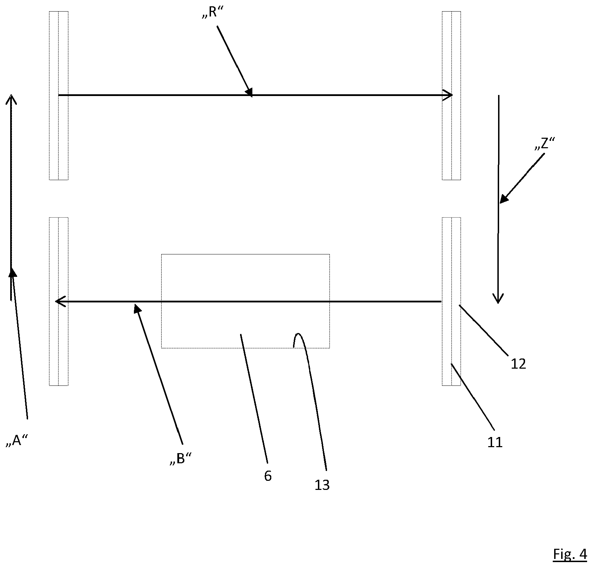

In Zeichnungsfigur 3 ist ähnlich Fig. 2 noch einmal der Prozesskammerboden 4 mit den Öffnungen der Dosiereinrichtung 5, des Baubehälters 6 und des Überlaufbehälters 8 dargestellt. Die Aufbringvorrichtung 12 mit dem darunter angeordneten Beschichterelement 11 ist in Pfeilrichtung über den Prozesskammerboden 4 geführt. Die Führung ist allerdings so vorgenommen, dass infolge einer Ausweichbewegung der gesamten Beschichteranordnung 12 der Scannerstrahl-Raumbereich 30, der über der Baukammer 6 liegt, frei bleibt. In Figur 3 ist angedeutet, dass die Auftragsvorrichtung 12 nach Beendigung des Beschichtungsvorganges B eine Ausweichbewegung A durchführt, daran schließt sich die Rückführbewegung R an und dann eine weitere Bewegung Z zum Zurückführen der Auftragsvorrichtung 12 und des Beschichterelementes 11 in die Ausgangsposition. Die Bewegungen Beschichten = B, Ausweichbewegung = A, Rückführbewegung = R und Zurückführen in die Ausgangslage = Z sind in Figur 4 noch einmal dargestellt.

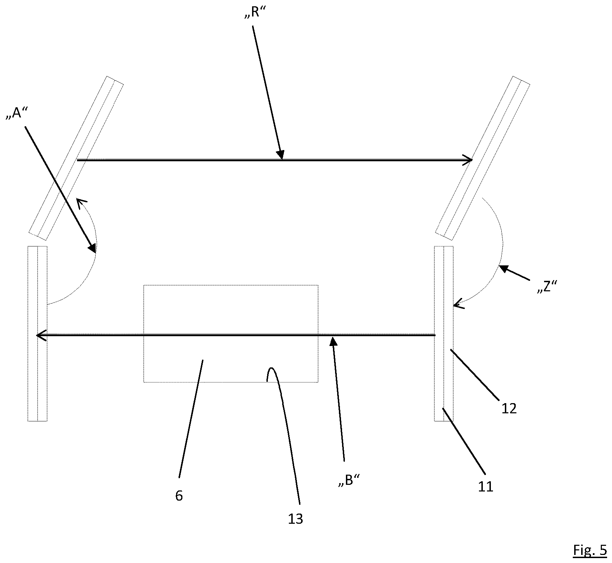

In Figur 5 ist ähnlich Figur 4 in Draufsicht nur die Baukammer 6 angedeutet. Die Auftragsvorrichtung 12 oder zumindest das Beschichtungselement 11 wird im Sinne einer Auftragsbewegung A hochgeschwenkt und vollzieht in hochgeschwenkter Stellung die Rückführbewegung R und kann dann im Sinne einer Zustellbewegung Z wieder in eine horizontale Stellung heruntergeklappt werden. Auch mit einer derartigen Ausweichbewegungsanordnung bleibt der Raumbereich der Scannerstrahl-Raumbereich 30 unbeeinflusst.

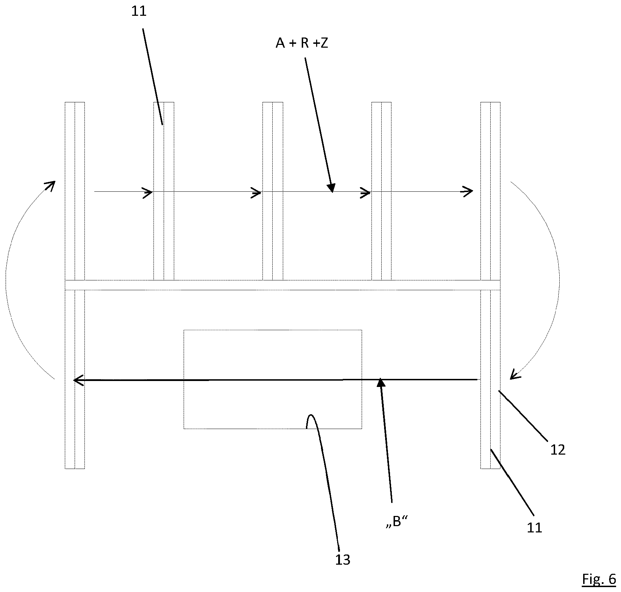

In Figur 6 ist eine weitere Möglichkeit gezeigt, das Beschichtungselement 11 ohne Störung des Scannerstrahl-Raumbereiches 30 zurückzuführen. Das Beschichtungselement 11 wird auf einem Laufwagen der Auftragsvorrichtung 12 z. B. auf einer einseitigen Schiene geführt. Nach Beendigung des Beschichtungsvorganges B wird im Sinne einer kombinierten Ausweich-Rückführ und Zurückführbewegung A, R, Z das Beschichtungselement 11 quasi wie ein Zeiger um 360° horizontal oder mit einer überlagernden Hochschwenkbewegung zurückgeführt in die Ausgangslage B1.

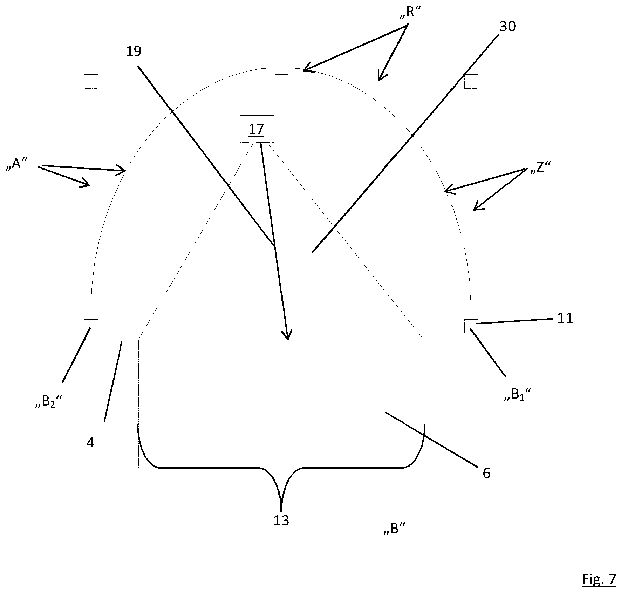

In Fig. 7 ist das Beschichtungselement 11 von der Seite gezeigt. Es wird beim Beschichtungsvorgang B von der Ausgangslage B1 zur Beschichtungsendlage B2 geführt und dann entweder rechteckig zunächst nach oben geführt zurück in die Ausgangslage des Beschichterelementes 11 (A,R,Z).

Die Bewegungen A, R und Z sind so gewählt, dass sie oberhalb eines Scanners 17 verlaufen und dadurch den gesamten Scannerstrahl-Raumbereich 30 unbeeinflusst lassen.

In Zeichnungsfigur 3 ist rein schematisch noch eine Reinigungsvorrichtung 50 dargestellt, bei welcher das Beschichterelement 11 bei seiner Rückführung in die Ausgangslage B1 gereinigt werden kann, z. B. abgespült, abgeblasen oder dgl. wird. Da dies entfernt von der Baukammer 6 erfolgt, wird der Bauprozess durch den Reinigungsvorgang nicht negativ beeinflusst.

Ebenfalls in Figur 3 ist ein Beschichterelementwechsler 51 angedeutet, der wie ein Magazin aufgebaut sein kann und eine Mehrzahl von gleichen oder unterschiedlichen Beschichterelementen 11 beinhaltet. Ein Beschichterelementträger kann im Zuge der Rückführung oder Ausweichbewegung mit einem neuen oder unterschiedlichen Beschichterelement 11 im Bereich des Beschichterelementwechslers 51 versehen werden.

Genauso ist es möglich, anstelle eines neuen Beschichterelementes 11 ein Sensorelement 52 zur Kaustikmessung oder dgl. an einem Beschichterelemtträger anzukoppeln, das ebenfalls im Beschichterelementwechsler 51 bereitgehalten werden kann.

### BEZUGSZEICHENLISTE

- 1: Vorrichtung
- 2: Gehäuse
- 3: Prozesskammer
- 4: Prozesskammerboden
- 5: Dosiereinrichtung
- 6: Baubehälter
- 7: Tragevorrichtung
- 8: Überlaufbehälter
- 9: Aufbaumaterial
- 10: Schiene
- 11: Beschichterelement
- 12: Auftragsvorrichtung
- 13: Öffnung v. 6

- 15: Öffnung v. 8
- 16: Laser
- 17: Scanner
- 18: Fenster
- 19: Laserstrahl

- 30: Scannerstrahl-Raumbereich

- 50: Reinigungsvorrichtung
- 51: Beschichterelementwechsler
- 52: Sensorelement

## Patentansprüche

1. Vorrichtung zum Herstellen von dreidimensionalen Objekten durch aufeinanderfolgendes Verfestigen von Schichten eines mittels Strahlung verfestigbaren Aufbaumaterials an dem den jeweiligen Querschnitt des Objektes entsprechenden Stellen, mit
- einem eine Prozesskammer umfassenden Gehäuse,
- einem darin untergebrachten Baubehälter, wobei der Baubehälter eine Trageinrichtung umfasst,
- einer Bestrahlungsvorrichtung (17) zum Bestrahlen von Schichten des Aufbaumaterials, wobei die Bestrahlungsvorrichtung (17) einen Scanner (17) mit einem Scannerstrahl-Raumbereich (30) zwischen der Bestrahlungsvorrichtung (17) und dem Baubehälter oder einer aufgebrachten Schicht in dem Baubehälter umfasst,
- einer Dosiereinrichtung zum Zuführen des Aufbaumaterials;
- einer Aufbringvorrichtung zum Aufbringen der Schichten des Aufbaumaterials auf die Tragevorrichtung im Baubehälter oder eine zuvor gebildete Schicht in dem Baubehälter, wobei die Aufbringvorrichtung ein Beschichterelement (11) umfasst, welches während eines Beschichtungsprozesses von einer Ausgangslage (B1) zu einer Endlage (B2) bewegbar ist, um das von der Dosiereinrichtung zugeführte Aufbaumaterial als eine dünne Schicht in einem Aufbringbereich entlang einer linearen Auftragbewegung zu verteilen; und wobei
das Beschichterelement (11) am Ende eines Beschichtungsvorganges für eine Schicht bei der Rückführung des Beschichterelementes (11) in die Ausgangslage (B1) eine Ausweich-Rückführbewegung (A,R,Z) ausführt, bei welcher das Beschichterelement (11) den Scannerstrahl-Raumbereich (30) nicht kreuzt, **dadurch gekennzeichnet, dass**
das Beschichterelement (11) bei der Ausweich-Rückführbewegung (A,R,Z) mit einer erhöhten Geschwindigkeit verglichen mit einer Schichtauftragsgeschwindigkeit bewegt wird.

2. Vorrichtung nach Anspruch 2, **dadurch gekennzeichnet, dass** die Raumlage des Beschichterelementes (11) im Zuge der Ausweich-Rückführbewegung (A,R,Z) von der Raumlage des Beschichterelementes (11) beim Beschichtungsvorgang (B) abweicht.

3. Vorrichtung nach Anspruch 1 oder 2, **dadurch gekennzeichnet, dass** die Ausweichbewegung (A,R,Z) eine lineare Verschiebebewegung des Beschichterelementes (11) umfasst, die entlang einer zur Auftragsrichtung unterschiedlichen Richtung erfolgt.

4. Vorrichtung nach Anspruch 3, **dadurch gekennzeichnet, dass** die Richtung der zusätzlichen Ausweichbewegung (A) rechtwinkelig zur Verschieberichtung beim Schichtauftrag (B) verläuft.

5. Vorrichtung nach einem der Ansprüche 1 bis 4, **dadurch gekennzeichnet, dass** die Ausweich-Rückführbewegung (A,R,Z) ein Herausschwenken des Beschichterelements (11) aus dem Baubereich und ein Rückführen zu der Ausgangslage (B1) umfasst.

6. Vorrichtung nach einem der vorhergehenden Ansprüche, **dadurch gekennzeichnet, dass** bei der Ausweichbewegung das Beschichterelement (11) in eine zur Schichtebene der aufgetragenen Pulverschicht nicht parallele Lage überführbar ist.

7. Vorrichtung nach einem der vorhergehenden Ansprüche, **dadurch gekennzeichnet, dass** das Beschichtungselement (11) einseitig um wenigstens eine Achse verschwenkbar gelagert ist.

8. Vorrichtung nach einem der vorhergehenden Ansprüche, **dadurch gekennzeichnet, dass** die Ausweich-Rückführbewegung (A,R,Z) umfasst:
eine lineare Verschiebebewegung des Beschichterelementes (11);
eine Hochschwenkbewegung des Beschichterelementes (11):
ein Drehen des Beschichterelements (11) um eine Drehachse; und/oder ein Anheben des Beschichterelements (11).

9. Vorrichtung nach einem der vorhergehenden Ansprüche, **gekennzeichnet durch** eine Reinigungsvorrichtung (50), wobei das Beschichtungselement im Zuge der Ausweich-Rückführbewegung (A,R,Z) von der Reinigungsvorrichtung (50) beaufschlagt wird.

10. Vorrichtung nach einem der vorhergehenden Ansprüche, **gekennzeichnet durch** einen Beschichterelementwechsler (51), wobei das Beschichterelement (11) im Zuge der Ausweich-Rückführbewegung (A,R,Z) durch einen Beschichterelementwechsler (51) austauschbar ist.

11. Vorrichtung nach Anspruch 10, wobei der Beschichterelementwechsler (51) ein Wechselmagazin umfasst, in welchem eine Mehrzahl von gleichen oder unterschiedlichen Beschichterelementen 11 und/oder Sensorelementen (52) vorhanden sind.

12. Vorrichtung nach einem der vorhergehenden Ansprüche, gekennzeichetn durch wenigstens ein Sensorelement zur Kaustik-Messung der Laserstrahlqualität, wobei das Sensorelement an einer Halterung des Beschichterelements (11), wobei das Sensorelement durch das Beschichterelement (11) während oder anstelle eines Beschichtungsvorganges über den zu beschichtenden Bereich des Baufeldes führbar ist.

13. Verfahren zum Herstellen von dreidimensionalen Objekten durch aufeinanderfolgendes Verfestigen von Schichten eines Aufbaumaterials (9), mit folgenden Merkmalen:
- Durchführen eines Beschichtungsvorganges (B) mit einer Aufbringvorrichtung zum Aufbringen einer Schicht eines Aufbaumaterials (9) auf eine Tragevorrichtung innerhalb eines Baubehälters oder auf eine zuvor gebildete Schicht innerhalb des Baubehälters, wobei die Aufbringvorrichtung ein Beschichterelement (11) umfasst, und der Aufbringvorgang ein Bewegen des Beschichterelements (11) von einer Ausgangslage (B1) zu einer Endlage (B2), um das von der Dosiereinrichtung zugeführte Aufbaumaterial als eine dünne Schicht in einem Aufbringbereich entlang einer linearen Auftragbewegung zu verteilen, umfasst;
- Durchführen eines Bestrahlungsvorgangs mit einer Bestrahlungsvorrichtung (17) zur Bestrahlung der Schichten des Aufbaumaterials, welche während des Beschichtungsprozesses (B) aufgebracht wurde, wobei die Bestrahlungsvorrichtung einen Scanner (17) mit einem Scannerstrahl-Raumbereich (30) zwischen der Bestrahlungsvorrichtung (17) und dem Baubehälter oder einer aufgebrachten Schicht in dem Baubehälter umfasst, und
- Durchführen einer Ausweich-Rückführbewegung (A,R,Z) mit dem Beschichterelement (11) am Ende eines Beschichtungsvorganges für eine Schicht, um das Beschichterelement (11) in die Ausgangslage (B1) zurückzuführen ohne den Scannerstrahl-Raumbereich (30) zu kreuzen, wobei das Beschichterelement (11) bei der Ausweich-Rückführbewegung (A,R,Z) mit einer erhöhten Geschwindigkeit verglichen mit einer Schichtauftragsgeschwindigkeit bewegt wird.

14. Verfahren nach Anspruch 13, **dadurch gekennzeichnet, dass** die Ausweich-Rückführbewegung (A,R,Z) umfasst:
eine lineare Verschiebebewegung des Beschichterelementes (11);
eine Hochschwenkbewegung des Beschichterelementes (11):
ein Drehen des Beschichterelementes (11) um eine Drehachse; und/oder ein Anheben des Beschichterelementes (11).

## Claims

1. Device for producing three-dimensional objects by successive hardening of layers of a structural material which can be hardened by means of radiation, at the locations corresponding to the respective cross section of the object, comprising
- a housing which encompasses a process chamber,
- a construction container accommodated therein, wherein the construction container comprises a support device,
- an irradiation device (17) for irradiating layers of the structural material, wherein the irradiation device (17) comprises a scanner (17) having a scanner beam spatial region (30) between the irradiation device (17) and the construction container or an applied layer in the construction container,
- a metering device for supplying the structural material,
- an application device for applying the layers of the structural material to the support device in the construction container or a previously formed layer in the construction container, wherein
the application device comprises a coater element (11) which is movable, during a coating process, from a starting position (B1) to an end position (B2), in order to distribute the structural material, fed by the metering device, as a thin layer in an application region, along a linear application movement; and wherein
the coater element (11) performs an evasive return movement (A, R, Z) at the end of a coating process for a layer, when returning the coater element (11) into the starting position (B1), in which movement the coater element (11) does not cross the scanner beam spatial region (30), **characterised in that**
the coater element (11) is moved, during the evasive return movement (A, R, Z), at a higher speed compared with a layer application speed.

2. Device according to claim 2, **characterised in that** the spatial position of the coater element (11) during the evasive return movement (A, R, Z) deviates from the spatial position of the coater element (11) during the coating process (B).

3. Device according to either claim 1 or claim 2, **characterised in that** the evasive movement (A, R, Z) comprises a linear displacement movement of the coater element (11) which takes place along a direction different from the application direction.

4. Device according to claim 3, **characterised in that** the direction of the additional evasive movement (A) extends at right angles to the displacement direction during layer application (B).

5. Device according to any of claims 1 to 4, **characterised in that** the evasive return movement (A, R, Z) comprises pivoting out of the coater element (11) from the construction region and a return to the starting position (B1).

6. Device according to any of the preceding claims, **characterised in that**, during the evasive movement, the coater element (11) can be transferred into a position that is not in parallel with the layer plane of the applied powder layer.

7. Device according to any of the preceding claims, **characterised in that** the coating element (11) is mounted so as to be pivotable about at least one axis, on one side.

8. Device according to any of the preceding claims, **characterised in that** the evasive return movement (A, R, Z) comprises:
a linear displacement movement of the coater element (11);
an upward pivoting movement of the coater element (11);
a rotation of the coater element (11) about an axis of rotation; and/or
raising of the coater element (11).

9. Device according to any of the preceding claims, **characterised by** a cleaning device (50), wherein the coating element is acted on by the cleaning device (50) during the course of the evasive return movement (A, R, Z).

10. Device according to any of the preceding claims, **characterised by** a coater element exchanger (51), wherein the coater element (11) can be replaced by means of a coater element exchanger (51) during the evasive return movement (A, R, Z).

11. Device according to claim 10, wherein the coater element exchanger (51) comprises a change magazine in which a plurality of identical or different coater elements 11 and/or sensor elements (52) are provided.

12. Device according to any of the preceding claims, **characterised by** at least one sensor element for caustic measurement of the laser beam quality, wherein the sensor element can be guided on a retainer of the coater element (11), wherein the sensor element can be guided over the region, to be coated, of the construction area, by means of the coater element (11), during or instead of a coating process.

13. Method for producing three-dimensional objects by successive hardening of layers of a structural material (9), having the following features:
- carrying out a coating process (B) by means of an application device for applying a layer of a structural material (9) on a support device within a construction container or on a previously formed layer within the construction container, wherein
the application device comprises a coater element (11), and the application process comprises a movement of the coater element (11) from a starting position (B1) to an end position (B2) in order to distribute the structural material, fed by the metering device, as a thin layer in an application region along a linear application movement;
- carrying out an irradiation process by means of an irradiation device (17) for irradiating the layers of the structural material which was applied during the coating process (B), wherein the irradiation device comprises a scanner (17) having a scanner beam spatial region (30) between the irradiation device (17) and the construction container or an applied layer in the construction container, and
- carrying out an evasive return movement (A, R, Z) using the coater element (11), at the end of a coating process for a layer, in order to return the coater element (11) into the starting position (B1) without crossing the scanner beam spatial region (30), wherein
the coater element (11) is moved, during the evasive return movement (A, R, Z), at a higher speed compared with a layer application speed.

14. Method according to claim 13, **characterised in that** the evasive return movement (A, R, Z) comprises:
a linear displacement movement of the coater element (11);
an upward pivoting movement of the coater element (11);
a rotation of the coater element (11) about an axis of rotation; and/or
raising of the coater element (11).

## Revendications

1. Dispositif pour la fabrication d'objets tridimensionnels par solidification successive de couches d'un matériau de construction solidifiable au moyen d'un rayonnement aux emplacements correspondant à la section transversale respective de l'objet, avec
- un boîtier comprenant une chambre de processus,
- un récipient de construction disposé dans celui-ci, le récipient de construction comprenant un appareil porteur,
- un dispositif d'irradiation (17) pour irradier des couches du matériau de construction, le dispositif d'irradiation (17) comprenant un scanner (17) avec une zone d'espace de faisceau de scanner (30) entre le dispositif d'irradiation (17) et le récipient de construction ou une couche appliquée dans le récipient de construction,
- un appareil de dosage pour amener le matériau de construction ;
- un dispositif d'application pour appliquer les couches du matériau de construction sur le dispositif porteur dans le récipient de construction ou sur une couche précédemment formée dans le récipient de construction, le dispositif d'application comprenant un élément enducteur (11) qui peut être déplacé d'une position initiale (B1) à une position finale (B2) pendant un processus d'enduction afin de répartir le matériau de construction amené par l'appareil de dosage sous la forme d'une couche mince dans une zone d'application le long d'un mouvement d'application linéaire ; et à la fin d'une opération d'enduction pour une couche, l'élément enducteur (11) exécutant un mouvement de retour avec contournement (A, R, Z) lors du retour de l'élément enducteur (11) dans la position initiale (B1), selon lequel l'élément enducteur (11) ne croise pas la zone d'espace de faisceau de scanner (30), **caractérisé en ce que**
lors du mouvement de retour avec contournement (A, R, Z), l'élément enducteur (11) est déplacé à une vitesse augmentée par rapport à une vitesse d'application de la couche.

2. Dispositif selon la revendication 2, **caractérisé en ce que** la position d'espace de l'élément enducteur (11) au cours du mouvement de retour avec contournement (A, R, Z) diffère de la position d'espace de l'élément enducteur (11) lors de l'opération d'enduction (B).

3. Dispositif selon la revendication 1 ou 2, **caractérisé en ce que** le mouvement de contournement (A, R, Z) comprend un mouvement de translation linéaire de l'élément enducteur (11), qui s'effectue le long d'une direction différente de la direction d'application.

4. Dispositif selon la revendication 3, **caractérisé en ce que** la direction du mouvement de contournement supplémentaire (A) est perpendiculaire à la direction de translation lors de l'application de la couche (B).

5. Dispositif selon l'une quelconque des revendications 1 à 4, **caractérisé en ce que** le mouvement de retour avec contournement (A, R, Z) comprend un pivotement vers l'extérieur de l'élément enducteur (11) hors de la zone de construction et un retour à la position initiale (B1).

6. Dispositif selon l'une quelconque des revendications précédentes, **caractérisé en ce que** lors du mouvement de contournement, l'élément enducteur (11) peut être transféré dans une position non parallèle au plan de couche de la couche de poudre appliquée.

7. Dispositif selon l'une quelconque des revendications précédentes, **caractérisé en ce que** l'élément enducteur (11) est monté d'un côté de manière à pouvoir pivoter autour d'au moins un axe.

8. Dispositif selon l'une quelconque des revendications précédentes, **caractérisé en ce que** le mouvement de retour avec contournement (A, R, Z) comprend :
un mouvement de translation linéaire de l'élément enducteur (11) ;
un mouvement de pivotement vers le haut de l'élément enducteur (11) ;
une rotation de l'élément enducteur (11) autour d'un axe de rotation ; et/ou un soulèvement de l'élément enducteur (11).

9. Dispositif selon l'une quelconque des revendications précédentes, **caractérisé par** un dispositif de nettoyage (50), l'élément enducteur étant soumis à l'action du dispositif de nettoyage (50) au cours du mouvement de retour avec contournement (A, R, Z).

10. Dispositif selon l'une quelconque des revendications précédentes, **caractérisé par** un changeur d'élément enducteur (51), l'élément enducteur (11) pouvant être remplacé par un changeur d'élément enducteur (51) au cours du mouvement de retour avec contournement (A, R, Z).

11. Dispositif selon la revendication 10, dans lequel le changeur d'élément enducteur (51) comprend un magasin de changement dans lequel se trouvent une pluralité d'éléments enducteurs 11 et/ou d'éléments capteurs (52) identiques ou différents.

12. Dispositif selon l'une quelconque des revendications précédentes, **caractérisé par** au moins un élément capteur pour la mesure caustique de la qualité du faisceau laser, l'élément capteur à un support de l'élément enducteur (11), l'élément capteur pouvant être guidé par l'élément enducteur (11) pendant ou à la place d'une opération d'enduction sur la zone à enduire du champ de construction.

13. Procédé de fabrication d'objets tridimensionnels par solidification successive de couches d'un matériau de construction (9), présentant les caractéristiques suivantes :
- la réalisation d'une opération d'enduction (B) avec un dispositif d'application pour appliquer une couche d'un matériau de construction (9) sur un dispositif porteur à l'intérieur d'un récipient de construction ou sur une couche précédemment formée à l'intérieur du récipient de construction,
le dispositif d'application comprenant un élément enducteur 11), et l'opération d'application comprenant un déplacement de l'élément enducteur (11) d'une position initiale (B1) à une position finale (B2) afin de répartir le matériau de construction amené par l'appareil de dosage sous la forme d'une couche mince dans une zone d'application le long d'un mouvement d'application linéaire ;
- la réalisation d'une opération d'irradiation avec un dispositif d'irradiation (17) pour irradier les couches du matériau de construction qui ont été appliquées pendant le processus d'enduction (B), le dispositif d'irradiation comprenant un scanner (17) avec une zone d'espace de faisceau de scanner (30) entre le dispositif d'irradiation (17) et le récipient de construction ou une couche appliquée dans le récipient de construction, et
- la réalisation d'un mouvement de retour avec contournement (A, R, Z) avec l'élément enducteur (11) à la fin d'une opération d'enduction pour une couche, afin de ramener l'élément enducteur (11) à la position initiale (B1) sans croiser la zone d'espace de faisceau de scanner (30),
lors du mouvement de retour avec contournement (A, R, Z), l'élément enducteur (11) étant déplacé à une vitesse augmentée par rapport à une vitesse d'application de la couche.

14. Procédé selon la revendication 13, **caractérisé en ce que** le mouvement de retour avec contournement (A, R, Z) comprend :
un mouvement de translation linéaire de l'élément enducteur (11) ;
un mouvement de pivotement vers le haut de l'élément enducteur (11) ;
une rotation de l'élément enducteur (11) autour d'un axe de rotation ; et/ou un soulèvement de l'élément enducteur (11).
